# EUROPEAN PATENT APPLICATION

(11) **EP 2 778 745 A2**
(43) Date of publication of application: **17.09.2014**
(21) Application number: 14159939.9
(22) Date of filing: 14.03.2014
(51) Int. Cl.: G02B 27/01, G02B 23/12

(54) **Night vision display overlaid with sensor data**

(30) Priority: 14.03.2013 US 201313826675
(71) Applicant: Exelis, Inc., McLean, VA 22102 (US)
(72) Inventor: Kaplan, David B., Vinton, VA 24179 (US); Lynam, Jeff, Roanoke, VA 24019 (US)
(74) Representative: DREISS Patentanwälte PartG mbB

(57) **Abstract**

Sensor data indicative of a user's environment is received from a sensor. A video signal is generated which comprises a visual representation of the sensor data. The video signal is combined with a night vision view of the user's environment to overlay the visual representation of the sensor data over the nigh vision view of the user's environment. The overlaid night vision view of the user's environment is displayed to the user.

## Description

### TECHNICAL FIELD

The present disclosure relates to night vision display devices, and in particular, user wearable night vision display devices such as night vision goggles.

### BACKGROUND

Technology is becoming more and more integrated into the equipment used by modern soldiers. For example, global positioning system ("GPS") receivers, night vision devices, and gunfire detectors are becoming standard equipment for today's modern soldier.

GPS receivers allow users, such as soldiers to navigate in unfamiliar territory, track potential targets, and provide guidance to "smart" bombs and missiles.

A night vision device, such as a pair of night vision goggles, provides enhanced images of low light environments. Night vision is made possible by a combination of two approaches: increasing spectral range, and increasing intensity range. For example, some night vision devices operate by collecting tiny amounts of visible light, converting the photons of light into electrons, amplifying the number of electrons in a microchannel plate, and converting the amplified electrons back to a visible image. The enhanced images allow soldiers to operate effectively while remaining safe under the cover of darkness.

A gunfire detector is a system that detects and conveys the location of gunfire or other weapon fire using acoustic and/or optical sensors or arrays of sensors. The detectors are used by law enforcement, security, military and businesses to identify the source and, in some cases, the direction of gunfire and/or the type of weapon fired. Most systems possess three main components: a microphone or sensors, a processing unit, and a user-interface that displays gunfire alerts.

### BRIEF DESCRIPTION OF THE DRAWINGS

FIG. 1 is an example night vision display device in which a night vision image is overlaid with gunshot detector sensor data.
FIG. 2 is a flowchart illustrating a method of overlaying gunshot detector sensor data on a night vision display.
FIG. 3 is a first example of overlaying gunshot detector sensor data on a night vision display.
FIG. 4 is a second example of overlaying gunshot detector sensor data on a night vision display.
FIG. 5 is a third example of overlaying gunshot detector sensor data on a night vision display.
FIG. 6 illustrates a user wearing a pair of night vision goggles configured to display a night vision image overlaid with gunshot detector sensor data.

### DESCRIPTION OF EXAMPLE EMBODIMENTS

### Overview

Sensor data indicative of a user's environment is received from a sensor. A video signal is generated which comprises a visual representation of the sensor data. The video signal is combined with a night vision view of the user's environment to overlay the visual representation of the sensor data over the night vision view of the user's environment. The overlaid night vision view of the user's environment is displayed to the user.

### Example Embodiments

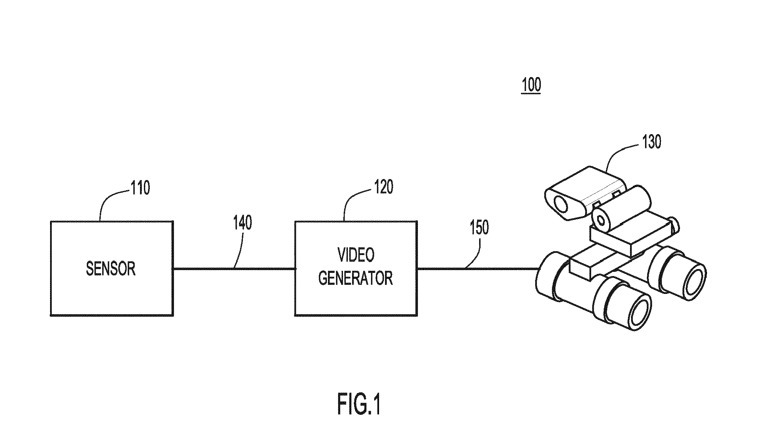

Depicted in FIG. 1 is a block diagram of an apparatus 100 configured to overlay a visual representation of sensor data over a night vision view of a user's environment. The apparatus includes a sensor 110 embodied in a gunshot detector, a video generator 120 and a display device 130. As depicted in FIG. 1, display device 130 is embodied in a night vision goggle which is configured to display an enhanced image of a low-light environment. In other words, night vision goggle 130 displays to a user a night vision view of the user's environment. Gunshot detector 110 provides sensor data 140 to video generator 120, which provides a video signal 150 to display device 130.

Unlike the device of FIG. 1, using a night vision display, such as a night vision goggle, in conjunction with a sensor incorporating its own display device can be difficult. For example, a GPS device with a backlit screen, when viewed through a pair of night vision goggles, will oversaturate the night vision device, "whiting out" the display in the night vision goggles. Therefore, a user may have to remove their night vision goggles in order to view the display of a GPS device. Similarly, a backlit display of a gunshot detector may similarly "white out" the display of a pair of night vision goggles. Of course, removing night vision goggles to view a backlit screen comes with numerous drawbacks. For example, removing and replacing the night vision goggles can be cumbersome and time consuming, particularly if the user is attempting to move quickly through difficult terrain. Additionally, if a user's eyes have adapted to low light conditions, looking into a backlit screen will destroy the user's night-adapted vision. Furthermore, the light emitted from the backlit screen may alert other individuals, such as enemy combatants, to the user's location.

Other sensors rely on audio cues to communicate their data to a user. For example, some gunshot detectors include an ear piece, with a computer generated voice providing an auditory indication of the location of a detected gunshot. Unfortunately, these auditory indications may be heard by unintended parties, the shooter of the detected gunshot for example. Furthermore, individuals may find auditory indications of sensor data to be less convenient, descriptive, and accurate than visual indications.

In order to provide a different sensor/display solution, the device of FIG. 1 overlays video signal 150, which incorporates a visual representation of sensor data 140, over the display of night vision goggle 130, allowing a user to view the sensor data 140 without removing night vision goggles 130, and without relying on auditory representations of the data.

Gunshot detector 110, through the detection of the sound of a gunshot, and/or through the light emitted by a muzzle flash, is able to provide sensor data about the location of the gunshot. For example, if gunshot detector 110 is worn by the user, gunshot detector 110 may determine the location of the gunshot relative to the user, and provide sensor data, such as the range and direction for the location of the gun shot. Similarly, if gunshot detector 110 is located remotely from the user, the sensor data 140 provided by gunshot detector 110 can be combined with location information for the user to determine the location of the gunshot relative to the user.

According to other examples, sensor 110 may also include a global positioning system ("GPS") receiver. Accordingly, sensor 110 may receive global positioning data from a global positioning satellite. For example, the sensor 110 may receive global positioning data for the user, other individuals in the area, or the location of other items of interest, such as the location of a gunshot. The global positioning data may be provided to video generator 120 through sensor data 140. In other examples, sensor 110 may be embodied in a vehicle diagnostic sensor configured to provide diagnostic data for a vehicle, such as the vehicle in which the user is travelling. The diagnostic data may be provided to video generator 120 through sensor data 140, and displayed to the user through night vision device 130. In other examples, sensor 110 may be embodied in a light detection and ranging ("LIDAR") device.

Video generator 120 may be included in a multipurpose computing device, such as a laptop, a tablet computer, a smart phone, or other multipurpose computing device. Accordingly, the video generator 120 may be embodied in a microcontroller or microprocessor in order to generate video signal 150. In other examples, the video generator 120 may be a purpose-built processor, such as an application specific integrated circuit ("ASIC") or a field programmable gate array ("FPGA"). Whether the video processor 120 utilizes a multipurpose process, or a purpose built processor, the video processor may be incorporated into the night vision goggle 130, or be arranged external to the night vision goggle 130 and configured to communicate video signal 150 through a wired or wireless connection. Similarly, video generator 120 may receive the sensor data through a wired or wireless connection.

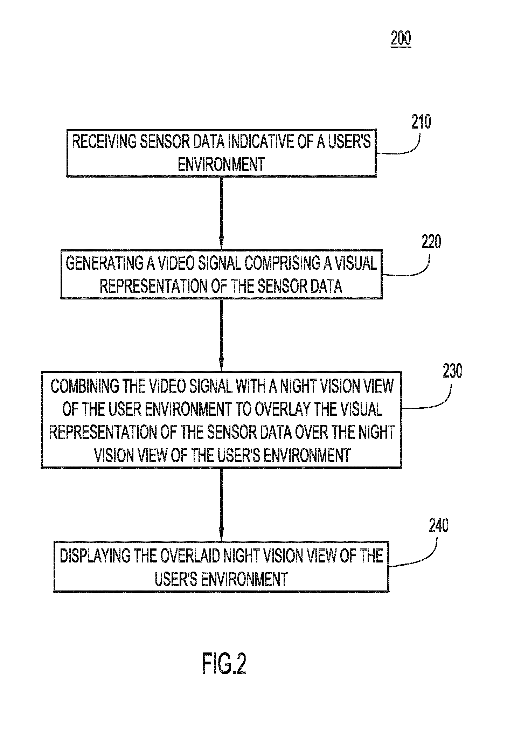

With reference now made to FIG. 2, depicted therein is a flowchart 200 illustrating a process of overlaying a visual representation of sensor data onto a night vision image. The process begins in step 210 where sensor data indicative of a user's environment is received. This sensor data may be the output from a gunshot detecting sensor, and therefore, the data may be indicative of the location of a gunshot relative to the sensor. The sensor data may also include a combination of data streams. For example, the data may include data from a gunshot detector indicating the location of a gunshot relative to a detector external to the user, as well as GPS data for the location of the detector and for the location of the user, thereby allowing a determination of the relative positions of the gunshot and the user. According to other examples, the data indicative of the user's environment may be GPS data indicating the location of the user and/or the location of other items of interest to the user. For example, if the user travelling to a particular destination, the sensor data may indicate the direction of the destination relative to the user's current location. Of course, other kinds of sensor data may also be received.

In step 220, a video signal comprising a visual representation of the sensor data is generated. For example, if the sensor data comprises gunshot location data as well as GPS coordinates for the user, generating the video signal may comprise generating an alphanumeric representation of the gunshot's location. According to other examples, the location of the user in the environment and the orientation of the user may be known. Therefore, the generated video signal may be a visual representation, such as an arrow or crosshairs, indicating where in the user's night vision view of the environment a gunshot originated. Similarly, if the sensor data includes GPS coordinates for a user's desired destination, the video signal may include a visual representation of the direction the user needs to travel to reach the destination.

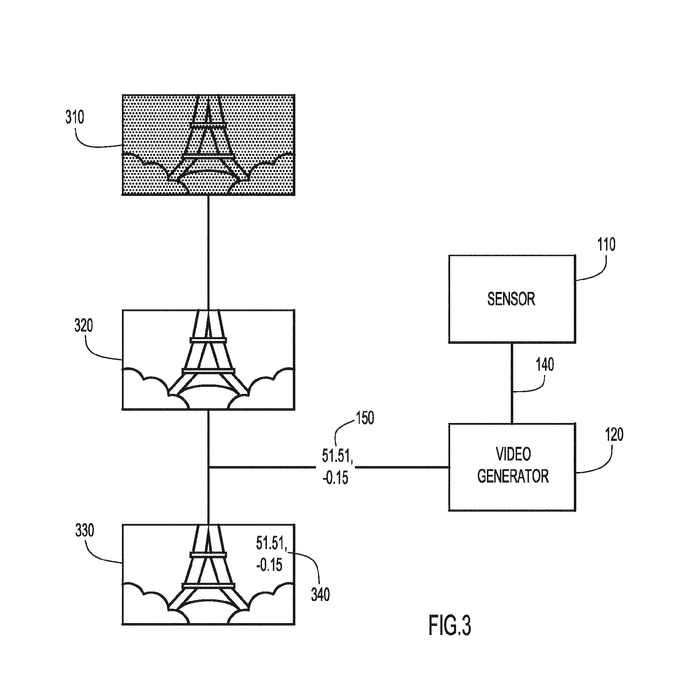

In step 230, the video signal is combined with a night vision view of the user's environment, thereby overlaying the visual representation of the sensor data over the night vision view of the user's environment. Specific examples of overlaying the video signal with the night vision view of the user's environment are described in greater detail in reference to FIGs. 3-5.

Finally, in step 240 the night vision view of the user's environment overlaid with the video signal is displayed to the user.

With reference now made to FIG. 3, depicted therein is an example of overlaying a visual representation of sensor data 140 on a night vision image 320. Specifically, unenhanced image 310 illustrates an example of how a user may view their environment absent any night vision enhancement. On the other hand, night vision display 320 illustrates how a user may view their environment after enhancement from, for example, a monocular night vision device which may be incorporated into the gun sight of a firearm, or a monocular night vision device configured to be wearable, such as a head-mounted night vision display. According to other examples, night vision display 320 may be provided by night vision goggles. Image 330 shows how the overlay 340 of the video signal 150 is displayed with the enhanced night vision view of image 320.

In order to provide overlaid image 330, video generator 120 receives sensor data 140 from sensor 110. The sensor data 140 may be received in the form of a serial stream, such as serial stream of binary characters. While the serial stream may be encoded with coordinate information for a user's location, the location of a user's destination, the location of a gunshot, the location of a user's desired direction, or the location of another item of interest for the user, the sensor data itself is non-visual data. Accordingly, video generator 120 converts this serial stream into a video signal 150 to provide a visual representation of the sensor data 140 that can be overlaid on a night vision image. As depicted in FIG. 3, the video generator 120 generates video signal 150 which includes an alphanumeric representation of sensor data 140. Specifically, video signal 150 includes decimal longitude and latitude coordinates for the location of a gunshot, in this case, "51.51, -0.15." Of course, video signal 150 could have included the equivalent degrees, minutes and seconds coordinates (e.g. "51° 30' 35.9994, 0° 9' 0""), or another visual representation of the sensor data.

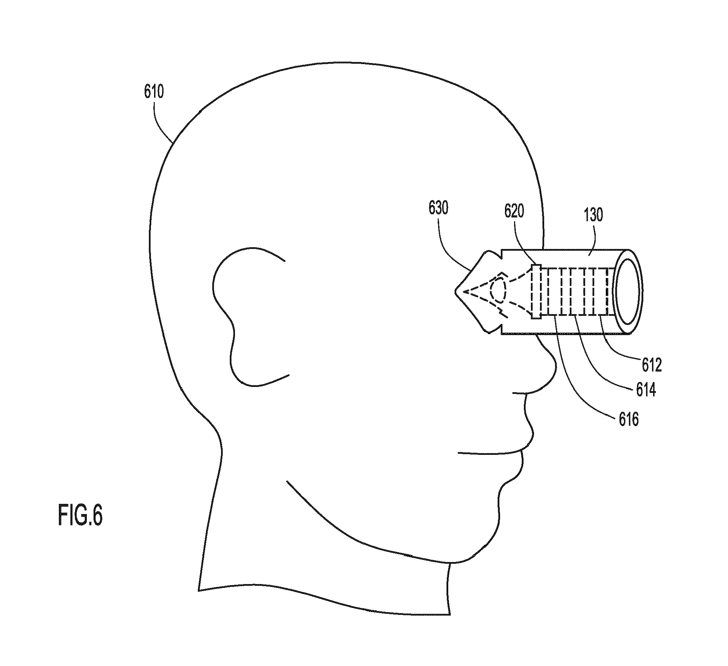

In order to overlay the video signal with the night vision view, a first display and a second display may be used. Turning briefly to FIG. 6, depicted therein in is night vision goggle 130 worn by a user 610 which includes a first display 616 and a second display 620. Night vision goggle 130 operates by receiving external light which is incident on photocathode 612. Photocathode 612 converts the incident light into electrons. The electrons are multiplied by microchannel plate 614, and subsequently converted back into light at phosphor screen 616, thereby displaying an enhanced night vision view of the light originally incident on photocathode 612. If the night vision goggle 130 displays the night vision image 320 of FIG. 3 with phosphor screen 616, video signal 150 of FIG. 3 may be displayed to the user with transparent screen 620 which is arranged between phosphor screen 616 and the user. Accordingly, video signal 150 from FIG. 3 will appear overlaid over the night vision image displayed by phosphor screen 616 due to the arrangement of transparent display 620. Transparent screen 620 may be embodied in any known transparent display, such as an organic light emitting diode ("OLED") display.

Returning to FIG. 3, other night vision devices may produce a video signal which includes night vision image 320. In such devices, video signal 150 may be combined with the night vision image 320 through the use of a video processing device. Specifically, a video processing device may combine video signal 150 with the output of a microchannel plate to generate a second video signal that displays overlaid image 330 when projected from a display device. According to other examples, a first video signal comprising the night vision image 320 may be combined with video signal 150 to generate a third video signal that displays overlaid image 330 when displayed from a display device.

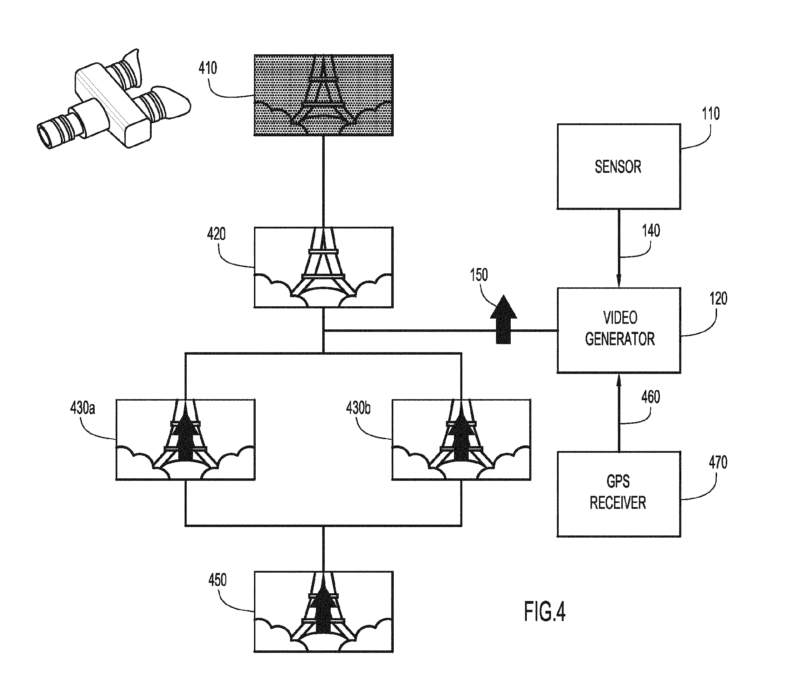

With reference now made to FIG. 4, depicted therein is a bi-ocular night vision display device, in which a single image is separately displayed to each eye of the user. As with the example of FIG. 3, the night vision image is overlaid with a video representation of sensor data 140. Also similar to image 310 of FIG. 3, unenhanced image 410 of FIG. 4 illustrates an example of how a user may view their environment absent any night vision enhancement. Because the device of FIG. 4 is bi-ocular, a single night vision enhanced image 420 is generated by the night vision device, and this same image is displayed to each of the user's eyes through left eye image 430a and right eye image 430b. Accordingly, video signal 150 from video generator 120 may be overlaid over both left eye image 430a and right eye image 430b, as indicated by overlays 440a and 440b, respectively. When viewed by the user, left eye image 430a and right eye image 430b are interpreted by the user as a single viewed image 450.

As depicted in FIG. 4, overlays 440a and 440b, as well as video signal 150, are not simple alphanumeric representations of sensor data 140. Instead, overlays 440a, 440b and video signal 150 depict an arrow pointing to the location of a gunshot or another item of interest to the user. In order to have the arrows accurately point to the correct location, GPS data 460 is also provided by GPS receiver 470.

If sensor 110 is not located on the user's person, the relative positions of the sensor 110 and the user must be known to accurately orient the arrow in video signal 150. Accordingly, GPS data 460 may provide the location of the user and the sensor 110. Additional data may provide the orientation of the user and/or the sensor. For example, a magnetic or gyroscopic sensor may be included in sensor 110 and the GPS receiver 470, thereby allowing orientation data to be included in sensor data 140 and GPS data 460, respectively. Similarly, a motion vector may be calculated for the user from GPS data 460, which can also be used to determine orientation of the user. Of course, while the GPS receiver 470 and the sensor 110 are depicted as two separate devices, the functions of the GPS receiver 470 and the sensor 110 may be embodied in more or fewer devices. For example, the sensor 110 may be embodied as a GPS receiver, and therefore the functions of the GPS receiver 470 would be provided by sensor 110. Similarly, the locations for the user and the sensor 110 may be sent by separate GPS receivers. On the other hand, if sensor 110 is embodied in a gunshot detector and on the person of the user, only the orientation data and the gunshot detector data may be necessary to accurately orient the arrow in video signal 150, and the GPS data may be omitted.

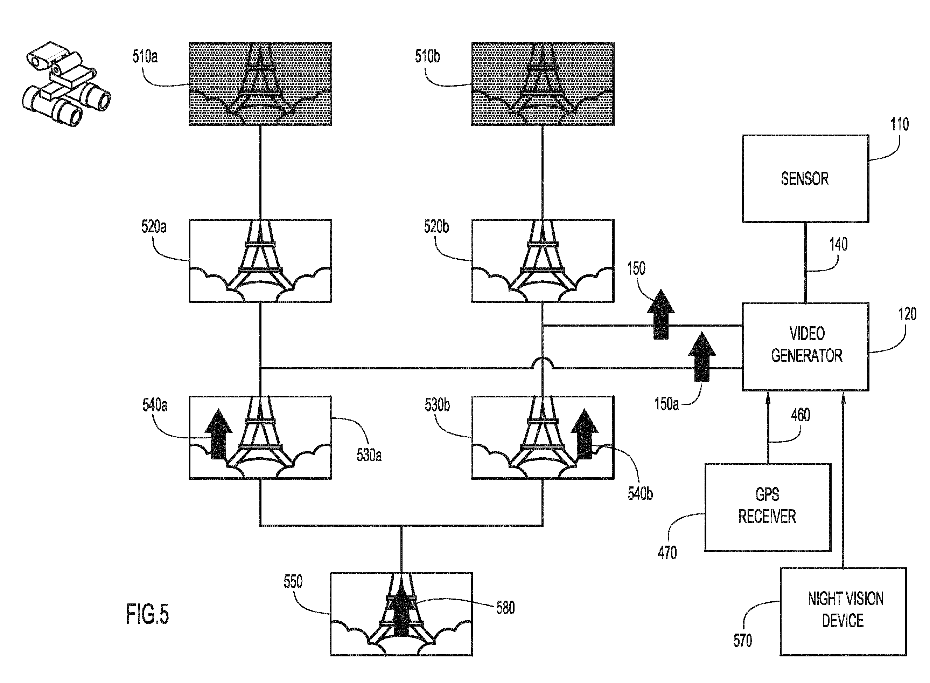

Turning now to FIG. 5, depicted therein is a binocular display of a night vision image overlaid with a video representation of sensor data. Unlike the bi-ocular display of FIG. 4, a binocular display provides a separate image to each eye of the user. Accordingly, there are two separate optical channels in the night vision device of FIG. 5. Specifically, left unenhanced image 510a is enhanced by the night vision device to generate left night vision image 520a. The left enhanced image is overlaid with a visual representation of sensor data to provide left eye image 530a. Similarly, right unenhanced image 510b is enhanced by the night vision device to generate right night vision image 520b. The right enhanced image is overlaid with a visual representation of sensor data to provide right eye image 530b. When these two images are viewed by the left and right eyes of the user, the user's brain interprets them as a single stereoscopic image 550.

Because overlaid images 530a and 530b are combined to form stereoscopic image 550, the user may be provided with a 3-dimensional image. Yet, the use of two optical channels may add additional complexity to the overlaying of sensor data onto night vision images For example, left enhanced image 520a will be slightly different than right enhanced image 520b. Accordingly, left overlay 540a may need to be positioned in a different location in left enhanced image than where right overlay 540b is positioned in right enhanced image 520b. The difference in positioning of left overlay 540a and right overlay 540b is depicted in left overlaid image 530a and right overlaid image 530b, though the positioning has been exaggerated to better illustrate the point.

In order to accurately position overlays 540a and 540b, video generator 120 is provided with night vision device data 560 from night vision device 570. Specifically, night vision device 570 may provide data indicative of, for example, where and how night vision device 570 is arranged and focused. Furthermore, the night vision device data 560 may include information indicating the relative positions of the left optical channel used to create the left enhanced image 520a and the right optical channel used to create the right enhanced image 520b. By considering the night vision device data 560, the video generator may generate two separate video signals, left video signal 150b and right video signal 150a. Left video signal 150a will be overlaid on left enhanced image 520a to generate left eye image 530a. Similarly, right video signal 150b is overlaid on right enhanced image 520b to generate right eye image 540b. Because video generator 120 has taken the night vision device data 560 into consideration when generating left video signal 150a and right video signal 150b, when the user views stereoscopic overlay 580 in stereoscopic image 550, stereoscopic overly 580 may accurately indicate the location of the item of interest to the user.

According to other examples, night vision device 570 may receive a single video signal, similar to the signal provided in FIGs. 3 and 4. Night vision device 570, being in possession of night vision device data 560, can appropriately modify the video signal to appropriate position overlay 540a in overlaid image 530a and overlay 540b in overlaid image 530b, respectively.

With reference now made to FIG. 6, depicted therein are some of the features of night vision displays that can be advantageously leveraged in example display devices utilizing the techniques described herein. Specifically, depicted in FIG. 6 is user 610 wearing night vision goggles 130. Unlike the external backlit screen of a GPS receiver or a gunshot detector, the display screen 630 of night vision goggle 130 is set within the external casing of night vision goggle 130. Accordingly, light from the display 620 is unlikely to leak into the environment surrounding the user, thereby preserving the user's light security. Night vision goggle 130 may also be configured to include features that conform to the face of user 610, such as eyepiece 630. Eyepiece 630 may further prevent light emitted by display 620 from leaking into the user's environment, further maintaining the user's light security.

The above description is intended by way of example only.

## Claims

1. An apparatus (100) comprising;
a display device (130) configured to provide a night vision view of a user's environment;
a sensor (110) configured to generate sensor data (140) indicative of the user's environment; and
a video generator (120) configured to receive sensor data (140) from the sensor (110) and provide a video signal (150) comprising a visual representation of the sensor data (140) to the night vision display device,
wherein the night vision display device is configured to display an image corresponding to the video signal overlaid with the night vision view of the user's environment.

2. The apparatus of claim 1, wherein the sensor comprises a gunshot detector configured to generate sensor data indicative of the location of a gunshot.

3. The apparatus of claim 2, further comprising a global positioning system receiver, providing global positioning information to the video generator,
wherein the video generator is configured to provide the video signal in response to the location information for the gunshot and the global positioning information.

4. The apparatus of claim 1, wherein the night vision display device comprises a night vision goggle.

5. The apparatus of claim 4, wherein the night vision goggle is configured to provide a binocular image to the user.

6. The apparatus of claim 4, wherein the night vision goggle is configured to provide a bi-ocular image to the user.

7. The apparatus of claim 1, wherein an eye piece of the display is configured to block light emitted from the display from leaking into the user's environment.

8. The apparatus of claim 1, wherein the video generator is embodied in a smartphone.

9. The apparatus of claim 1, wherein the video generator is embodied in at least one of an application specific integrated circuit, a field programmable gate array, a microcontroller, or a microprocessor.

10. The apparatus of claim 1, wherein the sensor data comprises non-visual data.

11. The apparatus of claim 1, wherein the night vision display device comprises a phosphor screen and a transparent display, wherein:
the night vision view is displayed from the phosphor screen and the video signal is displayed from the transparent display, and
the transparent display is arranged on a user-side of the phosphor screen.

12. A method comprising:
receiving sensor data from a sensor indicative of a user's environment;
generating a video signal comprising a visual representation of the sensor data;
combining the video signal with a night vision view of the user environment to over lay the visual representation of the sensor data over the night vision view of the user's environment; and
displaying the overlaid night vision view of the user's environment.

13. The method of claim 12, wherein receiving sensor data comprises receiving sensor data from a gunshot detector indicative of a location of a gunshot.

14. The method of claim 13, further comprising:
receiving global positioning information,
wherein generating the video signal comprises overlaying a location of the gunshot over the night vision view of the user's environment in response to the location information for the gunshot and the global positioning information.

15. An apparatus comprising:
a display device configured to provide a night vision view of a user's environment;
a gunshot detector configured to generate sensor data indicative of a location of a gunshot; and
a video generator configured to receive sensor data from the gunshot detector and provide a video signal comprising a visual representation of the sensor data to the night vision display device,
wherein the night vision display device is configured to display an image corresponding to the video signal overlaid with the night vision view of the user's environment.
